# DEMANDE DE BREVET EUROPEEN

(11) **EP 3 354 810 A1**
(43) Date de publication de la demande: **01.08.2018**
(21) Numéro de dépôt: 18290009.2
(22) Date de dépôt: 19.01.2018
(51) Int. Cl.: E03F 1/00, E02B 11/00

(54) **DISPOSITIF SOUTERRAIN POUR LA RÉCUPÉRATION, LE STOCKAGE, LA RÉUTILISATION OU L'INFILTRATION DES EAUX PLUVIALES OU USÉES**

(30) Priorité: 26.01.2017 FR 1700080
(71) Demandeur: Notaire, Edouard, 40600 Biscarosse (FR); Notaire, Jean-Michel, 40600 Biscarosse (FR)
(72) Inventeur: Notaire, Edouard, 40600 Biscarosse (FR); Notaire, Jean-Michel, 40600 Biscarosse (FR)
(74) Mandataire: Gallochat, Alain

(57) **Abrégé**

La présente invention concerne un dispositif souterrain pour la récupération, le stockage, la réutilisation ou l'infiltration des eaux pluviales ou usées.

Ce dispositif consiste en une sphère creuse (1) dotée d'une multiplicité d'orifices (3) situés sur la surface de ladite sphère (1). Lesdits orifices (3) sont répartis de façon uniforme sur la surface de ladite sphère (1) et ladite sphère (1) est dotée en son intérieur de renforts (4), lesdits renforts (4) consistant en des parois de faible hauteur disposées en arc de cercle à l'intérieur de ladite sphère (1). Préférentiellement, le diamètre de la sphère (1) se situe entre 5 et 20 cm, avec une épaisseur de la paroi (2) se situant préférentiellement entre 1 et 5 mm; dans cette configuration, le diamètre des orifices (3) se situe entre 0,5 et 1,5 cm. De façon avantageuse, la sphère (1) est réalisée en un matériau plastique rigide tel que le Polyéthylène haute densité (PEHD), le Polypropylène (PP), le Polychlorure de Vinyle (PVC), le Polytéréphtalate d'éthylène (PET), ou des matières plastiques issues du recyclage.

Application au domaine de la construction, du bâtiment, des travaux publics ou du génie civil.

## Description

La présente invention concerne un dispositif souterrain pour la récupération, le stockage, la réutilisation ou l'infiltration des eaux pluviales ou usées.

Divers dispositifs existent déjà, comme par exemple des tubes en métal ou en matière plastique dotés de perforations et enfouis dans le sol.

Il existe aussi des casiers en matériau PEHD ou PP composés à 95% de vide, qui sont mis côte à côte et enfouis sous terre après leur pose lors de constructions de lotissements, pavillons, etc. Le but de ces casiers est de créer du vide sous terre pour accueillir les eaux de ruissellement de ces nouvelles constructions.

Grâce à un tuyau en sortie d'ouvrage, on rejette les eaux collectées en régulant le flux pour ne pas engorger les réseaux publics d'eaux pluviales qui ne sont pas dimensionnés pour accueillir ces nouvelles constructions ou bien on laisse cette eau s'infiltrer dans le sol, ou encore on stocke cette eau en vue de la réutiliser pour l'arrosage des espaces verts, pour les wc, etc.

Ces casiers arrivent sur palettes, par semi-remorques et nécessitent du personnel pour les assembler et les poser sur chantier en fond de terrassement préalablement effectué par les entreprises de travaux publics. Ils sont ensuite recouverts d'une épaisseur précise de remblai pour pouvoir être installés sous espace vert, voirie légère (passage de voitures) ou voirie lourde (passage de camions).

Le montage, la manipulation, la pose de ces casiers nécessitent une main d'oeuvre qui reste sur chantier pendant plusieurs jours et augmentent le temps de mise en oeuvre et les coûts.

Le dispositif faisant l'objet de la présente invention pallie ces inconvénients et offre une solution à la fois facile de mise en place et peu coûteuse, sans nécessité de terrassement préalable conséquent.

Parmi les dispositifs connus se rapprochant de la présente invention, on peut citer les documents suivants :
- le modèle d'utilité allemand n° 20 2014 008919 décrit un dispositif pouvant consister en une sphère creuse dotée d'une pluralité d'orifices répartis sur la surface de ladite sphère ; en revanche, ce dispositif ne décrit aucunement, ni ne suggère, l'utilisation de renforts intérieurs présentant des caractéristiques spécifiques telles que décrites dans la présente invention ;
- la demande de brevet canadien n° 2 385 819 décrit également une sphère creuse dotée d'une pluralité d'orifices répartis sur la surface de ladite sphère ; en revanche, de même que pour le modèle d'utilité allemand précédemment cité, ce dispositif ne décrit aucunement, ni ne suggère, l'utilisation de renforts intérieurs présentant des caractéristiques spécifiques telles que décrites dans la présente invention ;
- la demande internationale publiée sous n° WO 2009/140295 décrit un dispositif de récupération des eaux mais ne présentent pas la forme sphérique du dispositif selon la présente invention.

De façon plus précise, le dispositif selon l'invention consiste en une sphère creuse dont la paroi est dotée de perforations.

Avantageusement, le dispositif est doté en son intérieur de renforts.

L'invention sera mieux comprise à la lecture de la description qui va suivre, faite en regard des figures données à titre indicatif et nullement limitatif parmi lesquelles :
- la Figure 1 est une vue extérieure du dispositif selon l'invention, et
- la Figure 2 est une coupe transversale du dispositif illustré à la Figure 1, montrant l'intérieur dudit dispositif.

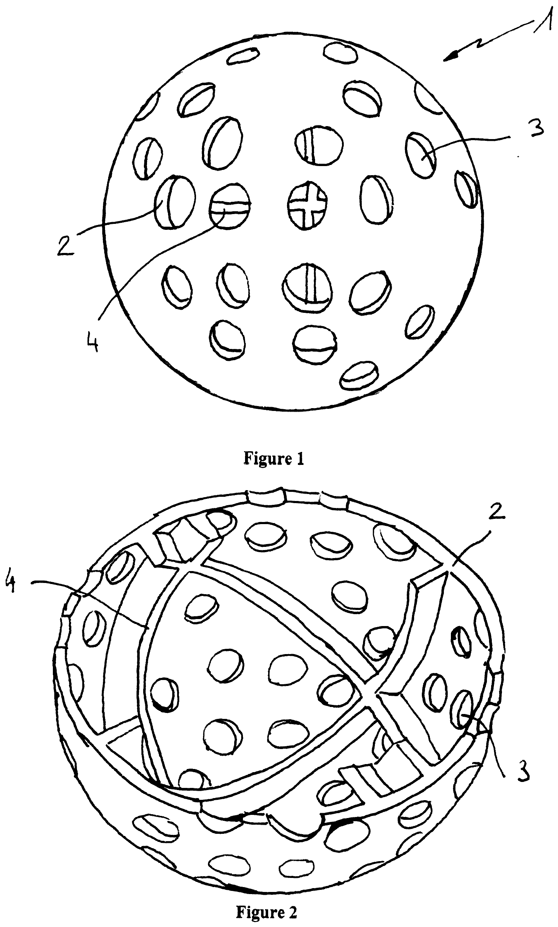

Référence étant maintenant faite à la Figure 1, le dispositif selon l'invention apparaît comme étant une sphère (1) creuse, dont la paroi (2) est dotée d'une multiplicité d'orifices (3) répartis sur la surface de la sphère (1) ; de préférence, ces orifices (3) seront uniformément répartis sur toute la surface de la sphère (1).

Il a été trouvé que le diamètre optimal de la sphère (1) se situe entre 5 et 20 cm, avec une épaisseur de la paroi (2) se situant préférentiellement entre 1 et 5 mm ; le rapport diamètre de la sphère (1) / épaisseur de la paroi (2) aboutit à un vide important à l'intérieur de la sphère (1) permettant une utilisation optimale pour la récupération, le stockage, la réutilisation et l'infiltration des eaux pluviales ou usées.

Avantageusement, la somme S des surfaces des orifices (3) représente entre 20 et 50 % de la surface de la sphère (1) ; chacun des orifices (3) est de préférence circulaire avec un diamètre préférentiellement compris entre 0,5 et 1,5 cm.

Ainsi, la combinaison « diamètre de la sphère (1), épaisseur de la paroi (2) et surface S », est-elle optimale lorsqu'il s'agit de récupérer ou stocker des eaux pluviales ou usées sous la surface du sol, une multiplicité de sphères (1) étant alors disposée dans une excavation qui sera ensuite recouverte d'un remblai dont l'épaisseur est fonction des contraintes d'utilisation (espaces verts, voirie légère ou voirie lourde) comme cela a précédemment été indiqué ; l'excavation précitée ne nécessite pas de travaux de terrassement tels que ceux mentionnés dans le cas de l'utilisation de casiers en matériau plastique : les sphères (1) sont livrées en « big bag » ou dans des camions bennes déversant directement les sphères (1) dans l'excavation évitant à la fois ledit terrassement conséquent et la mise en place des casiers en les positionnant côte à côte.

Un tel agencement aboutit à un gain de temps pour la mise en place et à un abaissement des coûts, notamment de main d'oeuvre.

Selon une variante préférentielle d'exécution du dispositif selon l'invention, la sphère (1) est munie en son intérieur de renforts (4) permettant d'offrir une meilleure résistance de l'ensemble des sphères (1) à l'écrasement ; ces renforts (4) sont plus visibles à la Figure 2. Ces renforts (4) consistent dans cette variante en des parois de faible hauteur disposées en arc de cercle à l'intérieur de la sphère (1) ; d'autres variantes d'exécution peuvent bien entendu être prévues au niveau desdits renforts (4) sans pour autant sortir du cadre de la présente invention.

S'agissant du matériau dans lequel est réalisée la sphère (1), et le cas échéant ses renforts (4), les matières plastiques rigides sont privilégiées ; entrent dans cette catégorie, le Polyéthylène haute densité (PEHD), le Polypropylène (PP) ou le Polychlorure de Vinyle (PVC), le Polytéréphtalate d'éthylène (PET), ou des matières plastiques issues du recyclage.

Le dispositif selon l'invention peut être fabriqué de plusieurs façons, par exemple en moulant deux demi-sphères munies chacune de ses orifices et renforts, puis en collant ou soudant les deux demi-sphères pour aboutir à la sphère (1) précédemment décrite. D'autres modes de fabrication sont également envisageables, comme par exemple le roto-moulage ou l'injection, ou tout autre mode connu de l'homme du métier pour obtenir ce genre de dispositif.

## Revendications

1. Dispositif souterrain pour la récupération, le stockage, la réutilisation ou l'infiltration des eaux pluviales ou usées du type consistant en une sphère creuse (1) dotée d'une multiplicité d'orifices (3) situés sur la surface de ladite sphère (1), lesdits orifices (3) étant répartis de façon uniforme sur la surface de ladite sphère (1) et ladite sphère (1) étant dotée en son intérieur de renforts (4) **caractérisé en ce que** lesdits renforts (4) consistent en des parois de faible hauteur disposées en arc de cercle à l'intérieur de ladite sphère (1).

2. Dispositif selon la revendication 1 **caractérisé en ce que** lesdits renforts (4) sont réalisés en un matériau plastique rigide.

3. Dispositif selon l'une des revendications 1 ou 2 **caractérisé en ce que** le diamètre de la sphère (1) se situe entre 5 et 20 cm, avec une épaisseur de la paroi (2) se situant préférentiellement entre 1 et 5mm.

4. Dispositif selon l'une quelconque des revendications 1 à 3 **caractérisé en ce que** le diamètre des orifices (3) se situe entre 0,5 et 1,5 cm.

5. Dispositif selon l'une quelconque des revendications 1 à 4 **caractérisé en ce que** la somme S des surfaces des orifices (3) représente entre 20 et 50 % de la surface de la sphère (1).

6. Dispositif selon l'une quelconque des revendications 1 à 5 **caractérisé en ce que** ladite sphère (1) est réalisée en un matériau plastique rigide.

7. Dispositif selon les revendications 2 et 6 **caractérisé en ce que** ledit matériau plastique rigide est choisi parmi les composés suivants : Polyéthylène haute densité (PEHD), Polypropylène (PP), Polychlorure de Vinyle (PVC), le Polytéréphtalate d'éthylène (PET), ou des matières plastiques issues du recyclage.

8. Dispositif selon l'une quelconque des revendications 1 à 7 **caractérisé en ce que** la sphère (1) et les renforts (4) forment une seule pièce.
